# EUROPEAN PATENT SPECIFICATION

(11) **EP 2 182 470 B1**
(45) Date of publication and mention of the grant of the patent: **25.04.2012**
(21) Application number: 08168113.2
(22) Date of filing: 31.10.2008
(51) Int. Cl.: G06K 13/07

(54) **Apparatus, system and method for laser personalization of plastic cards**
Vorrichtung, System und Verfahren zur Laserpersonalisierung von Plastikkarten
Appareil, système et procédé de personnalisation laser de cartes plastiques

(43) Date of publication of application: 05.05.2010
(73) Proprietor: GAP LASERS & PHOTONICS S.r.l., 21058 Solbiate Olona (VA) (IT)
(72) Inventor: Sala, Alessandro, 27023 Cassolnovo (Pavia) (IT); Zanzola, Paola, 27023 Cassolnovo (Pavia) (IT); Grolla, Gianluca, 21012 Cassano Magnago (Varese) (IT)
(74) Representative: Colombo, Stefano Paolo

(56) References cited:
- EP-A- 0 256 921
- WO-A-03/065299
- DE-A1-102006 023 008
- US-A- 6 027 020

## Description

The present invention relates to the sector of plastic cards such as, for example, cards used as identity document or as a credit card. In particular the present invention relates to an apparatus for laser personalization of said plastic cards, namely for printing on said plastic cards, using laser technology, one or more items of information, parts of text, a logo, a symbol, a photograph or the like. The present invention also relates to a system comprising one or more abovementioned apparatus for personalizing plastic cards, together with at least one other apparatus for performing further operations on a card to be personalized. The present invention also relates to a method for personalizing plastic cards using laser technology.

In the present description and in the claims the term "plastic card" will be used to indicate a relatively thin and substantially flat body comprising a polymer material such as, for example, polycarbonate or polyvinyl carbonate, PETG, ABS or other similar materials. Conveniently, the plastic card has a substantially rectangular shape with rounded edges. Conveniently, a plastic card has a format and characteristics which comply with the ISO 7810 standard.

In one possible embodiment, the plastic card comprises two or more layers, typically a non-transparent substrate and at least one layer, facing said non-transparent substrate, said non-transparent substrate being able to be altered by means of a laser beam. The laser beam passes through the transparent substrate and alters the non-transparent substrate.

Plastic cards are currently very widespread. Suitably personalized, they are used, for example, as an identity document, driving licence, tax code card, health care card, company identification document, as a credit or debit card, as access keys (for example to work premises, hotel rooms or the like) or as cards for recording points (used in supermarkets, petrol stations or the like).

There exists a very urgent need to provide a high degree of passive safety, namely to ensure that the cards are safe and cannot be easily altered by ill-intentioned persons. This need for passive safety is satisfied by means of laser technology, namely by laser printing personal data, identification symbols, a photograph or any other personalized information. Once the plastic card has been personalized using laser technology, it can no longer be altered, i.e. the laser marking cannot be removed or altered as instead could occur with a printed image. A printed image could, in fact, be altered or even completely removed with solvents or the like.

At present fairly complex, voluminous and costly machines for personalizing plastic cards using laser technology are known. These known machines, precisely because of their intrinsic characteristics in terms of complexity, volume and cost, are installed only in personalization centres and are designed to personalize a large number of cards for users living in different locations which may also be situated very far from each other. In other words, virgin cards (i.e. cards which have not been personalized yet) are personalized at a personalization centre and then sent to the owners or to the persons authorized to use them.

US 6,027,020 describes a system for processing chip and/or magnetic strip cards, comprising at least one card supply magazine for accommodating cards to be processed; at least a chip and/or magnetic stripe processing station for applying data/information on the chip and/or the magnetic stripe of the cards; at least one card body processing station for applying data/information on the card body; a card transport system which transports the cards from the card supply magazine to the chip and/or magnetic stripe processing station and subsequently to the card body processing stations and from these onwards on a card transport plane comprising a processing sequence axis and a processing parallelization axis.

The present inventors have noted that the data for performing personalization of the cards is transmitted in various ways to the personalization centres. The inventors have also realized that the transmission of data for the personalization operation constitutes a critical step since the data in question could be intercepted or even fraudulently acquired by ill-intentioned persons.

The present inventors have also noted that, after personalization, the card is sent (by post or private courier) to the owner. In this connection the inventors have established that, during transportation, there exists a significant risk of the card being stolen or lost, with consequences which can be easily imagined.

The present inventors have felt the need to personalize a plastic card in a more reliable manner, using also more personal data associated with the card owner or user, such as so-called biometric data, namely data relating to physiological or behavioural variables which typify human beings. The biometric data of a human being, as is known, may be derived from the measurement of various characteristics of a person's body or behaviour. Typical biometric data are associated with the iris and digital imprints. For the purpose of the present invention and the claims, the term "biometric data" will indicate physical characteristics of the person who owns or in any case uses the plastic card, which remain substantially unchanged over time. In particular, in each case, the term "biometric data" will be used to indicate one or more of the following data: data relating to digital imprints, geometry of the hand and face, form of the retina or iris, or pitch and tone of the voice.

However, the inventors have established that the personalization or encoding of a plastic card by means of biometric data using the currently available machines which receive the data to be personalized from remote locations and perform personalization in a centralized manner is not convenient and is extremely dangerous. In fact, the interception or stealing of biometric data would be equivalent to the theft of an identity.

Some nations have even adopted regulations which prohibit the transmission and storage of biometric data. This in fact prevents (or at least greatly discourages) the use of the abovementioned known apparatus.

The inventors have therefore set themselves the aim of providing an apparatus for laser personalization and encoding of plastic cards which is compact and therefore allows plastic cards to be personalized in a decentralized and no longer centralized manner. In other words, the aim of the inventors is to provide a substantially desktop apparatus which may be installed in several locations (for example police stations, embassies, consulates, banks, etc.) so as to allow encoding and personalization of a plastic card without having to transmit confidential, personal and/or biometric data.

This object is achieved by means of an apparatus for laser personalization of plastic cards, said apparatus comprising:
a) a card feeder for containing and feeding first plastic cards, each first plastic card comprising a memorization device able to be encoded;
b) an encoder for encoding the memorization device of said first plastic cards;
c) a first conveyor configured so as to convey said first plastic cards in a first direction from said card feeder to a second conveyor,
   wherein, during conveying of said first plastic cards in the first direction, the long side of the first plastic cards is kept substantially parallel to said first direction;
d) an inlet configured to receive second plastic cards,
   wherein said second conveyor is configured to convey said first plastic cards and/or said second plastic cards in a second direction, wherein said second direction is substantially perpendicular to said first direction; and
e) a laser personalization device configured to receive said first and/or said second plastic cards and configured so as to alter at least one portion of their surface in accordance with a predefined pattern,
   wherein the first and/or second plastic cards are conveyed through the laser personalization device to an exit opening of the apparatus along the second direction, the long side of the plastic cards being kept substantially perpendicular to the second direction.

Preferably, the inlet is situated on a side wall of the apparatus.

The inlet optionally allows manual feeding of second plastic cards.

The memorization device designed to be encoded may typically comprise a magnetic strip and/or a chip.

The second plastic cards, which are introduced through the opening, comprise a memorization device (for example a magnetic strip and/or a chip) which is already encoded.

In one embodiment, the first and the second conveyors comprise rubber rollers and belts.

The personalization module comprises at least one laser source where, preferably, the seat for the active means is formed directly in the resonator body.

The resonator body is preferably made of aluminium or aluminium alloy.

According to a second aspect, the present invention relates to a system for laser personalization of plastic cards, said system comprising an apparatus of the abovementioned type and at least one apparatus chosen from an encoding and/or printing module and a laminating module for applying a protective film.

In one embodiment the system comprises at least one further apparatus of the abovementioned type. Each of the apparatus comprises a respective laser source having any wavelength different from the laser source of the other apparatus.

In one embodiment, the system comprises a first apparatus of the abovementioned type having a laser source with an infrared wavelength, a second apparatus of the abovementioned type having a laser source with a green wavelength, and a third apparatus of the abovementioned type having a laser source with a UV wavelength.

According to a third aspect, the present invention provides a method for laser personalization of plastic cards, said method comprising:
a) providing a card feeder for containing and feeding first plastic cards, each first plastic card comprising a memorization device able to be encoded;
b) providing an encoder for encoding the memorization device of said first plastic cards;
c) providing a first conveyor configured so as to convey said first plastic cards in a first direction from said card feeder to a second conveyor,
   wherein, during conveying of said first plastic cards in the first direction, the long side of the first plastic cards is kept substantially parallel to said first direction;
d) providing an inlet configured to receive second plastic cards,
   wherein said second conveyor is configured to convey said first plastic cards and/or said second plastic cards in a second direction, wherein said second direction is substantially perpendicular to said first direction; and
e) providing a laser personalization device configured to receive said first and/or said second plastic cards and configured so as to alter at least one portion of their surface in accordance with a predefined pattern,
   wherein the first and/or second plastic cards are conveyed through the laser personalization device to an exit opening of the apparatus along the second direction, the long side of the plastic cards being kept substantially perpendicular to the second direction.

A detailed description of the invention provided purely by way of a non-limiting example is now provided with reference to the accompanying drawings in which:
- Figure 1 is an axonometric view of a system according to an embodiment of the invention, including an apparatus for laser personalization and encoding of plastic cards according to an embodiment of the present invention;
- Figure 2 is a schematic view of an apparatus for laser personalization and encoding of plastic cards according to an embodiment of the present invention;
- Figure 3 is a schematic view of the system according to Figure 1;
- Figure 4 is a schematic view of another system according to an embodiment of the present invention; and
- Figure 5 is a schematic axonometric view of an embodiment of a resonance cavity for a laser source in particular suitable for use with the present invention.

The apparatus 1 for laser personalization of plastic cards according to one embodiment of the present invention comprises a box-shaped housing which may be possibly opened at least partially for maintenance and/or verification and/or loading cards. Conveniently a substantially transparent window may be provided in the housing to allow monitoring of the plastic cards while they are being personalized. Conveniently, it is possible to provide a control panel 2 with a display for checking operation of the apparatus 1 and keys for programming at least partly operation of the apparatus 1. In one embodiment, the apparatus 1 has a roughly parallelepiped form with a width of about 350 mm, a depth of about 600 mm and a height of about 600 mm.

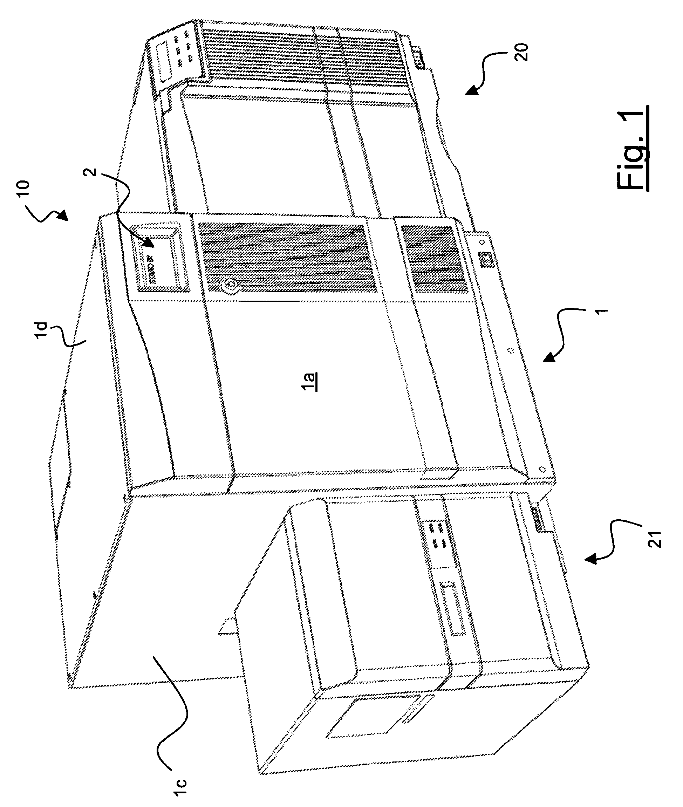

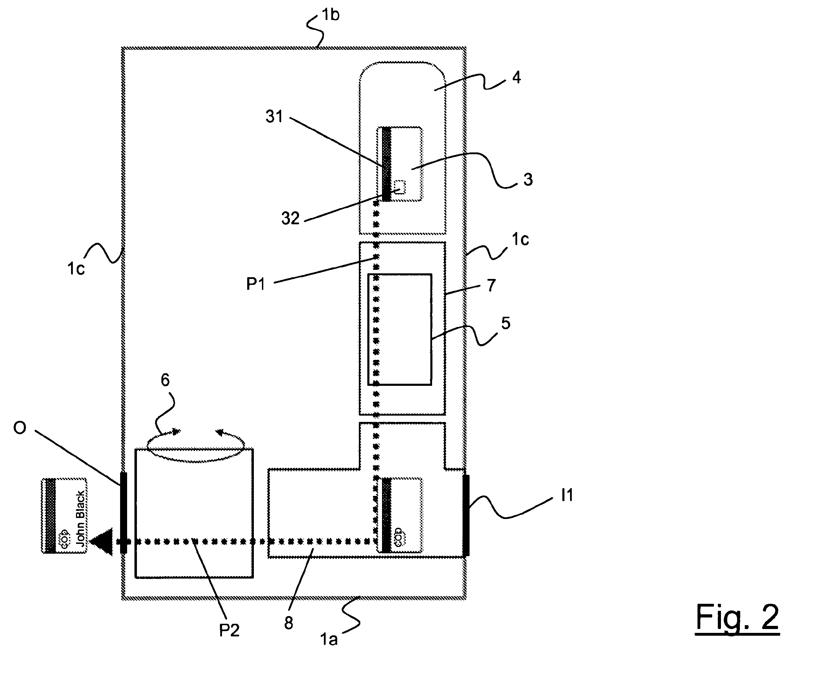

The apparatus 1 in Figure 1 has a front wall 1a, a rear wall 1b (Fig. 2), two side walls 1c, a base and a cover (or in any case a top wall) 1 d. In Figure 1, the apparatus 1 is shown associated with an encoding and/or colour retransfer module 20 and a laminating device 21 which will be described more fully below. For the purposes of the present description and claims, the combination of an apparatus 1 with at least either a colour retransfer module 20 or a laminating device 21 will be called a "system for laser personalization and encoding of plastic cards" (or simply "system" 10). A system 10 according to the present invention may comprise one or more apparatus 1.

According to an embodiment of the present invention, with reference to Figure 2, the apparatus 1 for laser personalization of plastic cards 3 comprises a card feeder 4 for a stack of cards. The plastic cards 3 are removed in succession from the card feeder and then encoded and personalized.

Figure 2 shows schematically plastic cards 3 which have a magnetic strip 31 and chip 32, but this configuration is not binding. In other words, the cards to be personalized could also not have a magnetic strip 31 and/or chip 32.

According to the present invention, a plastic card to be personalized and/or encoded is conveyed (for example by means of a conveyor belt 7 or by means of rubber rollers and belts) from the card feeder 4 to an encoder 5 for encoding a magnetic strip and/or a chip. Advantageously, the apparatus 1 also comprises an electronic control system which allows a direct network connection. The encoder 5 stores data of various kinds, for example biometric data.

According to an advantageous embodiment, the encoder 5 is an encoder which is available on the market (Neuron, Hopt Shueller, Adel, Sankyo, Omron or the like).

The path followed by the plastic cards in the apparatus 1 is schematically represented by means of a broken line. It is therefore clear that a card 3 to be encoded and/or personalized, starting from the card feeder 4, follows a path P1 which is substantially parallel to the side walls 1c of the apparatus 1 until the card 3 is situated in the vicinity of the front wall 1a. Thereafter, the card 3 follows a path P2 in a direction which is substantially perpendicular, i.e. parallel to the front side as far as the outlet.

Therefore, in other words, the card preferably follows an L-shaped path. Along the first section of the L (entry and encoding section P1) it is conveyed along its long side while along the second section of the L (laser personalization and exit section P2) it is conveyed along its short side. This has an advantageous consequence as regards the dimensions of the apparatus 1. In fact, frontal conveying along the short side of the card reduces the widthwise dimensions of the apparatus. Preferably, the card is never substantially rotated in the apparatus according to the invention.

Along the first conveying section (entry and encoding section) P1 the conveying direction is substantially parallel to the long side of the card. This is advantageous for encoding in the longitudinal direction of the magnetic strip. "Substantially parallel to the long side of the card" includes both a perfectly parallel arrangement and slight misalignment of a few degrees.

Along the second conveying direction (laser personalization and exit section) P2 the conveying direction is substantially parallel to the short side of the card. As mentioned above, this results in an advantageous reduction in the widthwise dimensions. "Substantially parallel to the short side of the card" includes both a perfectly parallel arrangement and a slight misalignment of a few degrees.

Preferably, during conveying of the card along the first section P1 of the L, the card 3 is directed with its rear side downwards and with its front side upwards.

As mentioned above and as illustrated in Figure 2, in the vicinity of the front wall 1a the plastic card 3 is conveyed parallel to the said front wall without rotation thereof. Therefore, along the second section P2 of the L the card is conveyed along its short side, i.e. with its short side parallel to the front wall of the L as far as an exit opening O. In this case also the card is conveyed by means of a conveyor belt 8 or the like.

The reference number 6 indicates a flip-over device where personalization of the plastic card takes place. Preferably, a laser source is situated above the flip-over device. The surface of the plastic card is altered by means of a laser beam in accordance with a predefined pattern so as to obtain personalization of the plastic card. Personalization may consist of written information (for example name and surname of the person who will use the card), a sequence of numbers and/or letters (for example a date or a tax code), a logo (for example the logo of a credit institute), a photograph (typically the photograph of the person who will use the card) or any other sign or symbol.

The device 6 comprises at least one laser source. In one embodiment, the laser source operates at an infrared wavelength of 1064 nm, such as a YAG laser or the like. In another embodiment the laser source 6 operates at a green wavelength of 532 nm. In another embodiment, the laser source operates at a UV wavelength of 355 nm. In another embodiment, the laser source operates at a UV wavelength of 266 nm. In another embodiment, the device 6 comprises two or more of the abovementioned laser sources.

Advantageously, the laser personalization device 6 operates in a direction parallel to the long side of the card, parallel to the magnetic strip where present. This is advantageous because it makes it easier to apply written data (for example the name of the person who will use the card) which generally extends parallel to the long side of the card.

In an advantageous embodiment, the card is rotated about its central longitudinal axis. This rotation is advantageous should it be required to print also the rear of the card or in the case of special markings of the CLI (Changing Laser Image) type.

According to an advantageous embodiment, the apparatus 1 also comprises a side opening I1 for the cards. Typically, this opening I1 in the side wall 1 c of the apparatus allows manual feeding of plastic cards 3. The plastic cards fed manually, if equipped with a magnetic strip or chip to be encoded, are conveyed by the first conveyor 7 to the encoder for encoding. After encoding, they are conveyed in the opposite direction by the same conveyor 7. If they are not to be encoded (because they do not have a magnetic strip or chip or in any case are already encoded), they continue directly towards the device 6.

The opening I1 is advantageously used also for the introduction of cards 3 supplied from a previous working stage. In particular, advantageously, a card introduced through the side opening exits from an encoding and/or colour printing module 20. This module 20 is shown in Figure 1, Figure 3 and Figure 4. Starting with a virgin card the module 20 in question performs one or more of the following operations: application and associated encoding of a magnetic strip, application and associated encoding of a chip, retransfer printing of at least one portion of the surface of the card. The term "retransfer printing" is understood as referring to a printing method based on sublimation of colour or a thermal retransfer resin. A module suitable for this purpose is marketed by Omnia Card Systems in Corsico, Italy, under the name "Data card RP90".

At the outlet of the apparatus 1 advantageously the card undergoes a lamination process in a laminating unit 21 so as to apply a substantially transparent film protecting the card itself. A laminating module 21 which can be used in the system according to the present invention is marketed by Omnia Card Systems in Corsico, Italy, under the name "Data card RL90".

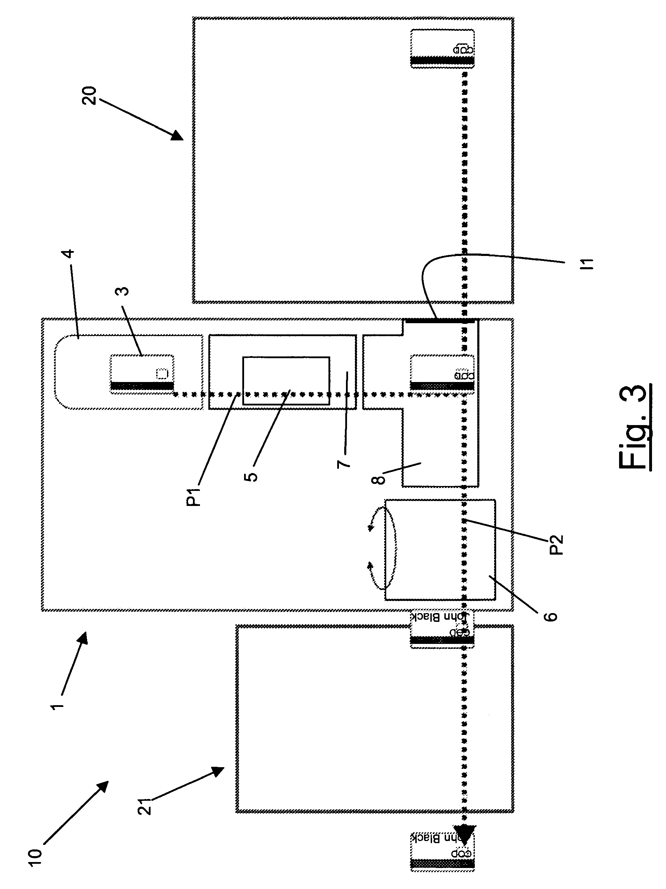

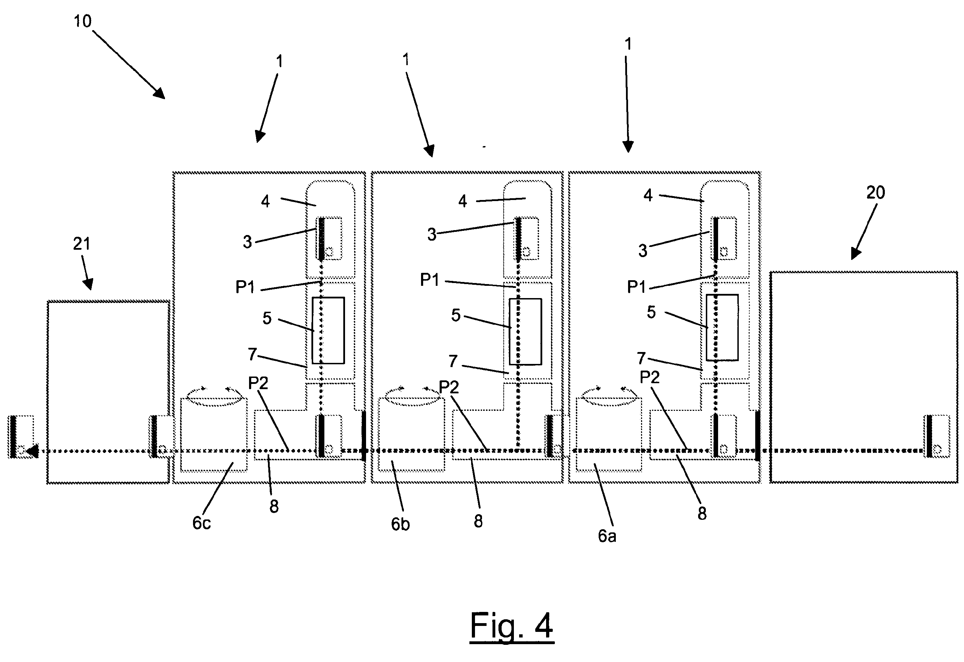

Figure 4 shows a system 10 according to another embodiment of the present invention. Advantageously, the system comprises an encoding and/or colour printing module 20 (similar to that described above in connection with the system according to Figure 3), three apparatus 1 and a laminating unit 21 (similar to that described above in connection with the system according to Figure 3).

Each of the apparatus 1 comprises a laser source. The laser source 6a, 6b, 6c in the three apparatus 1 may have the same wavelength (for example the infrared wavelength of 1064 nm, of the YAG laser type or the like) or a different wavelength. In one embodiment, a first source (6a) of the three laser sources performs laser markings at the infrared wavelength of 1064 nm (YAG laser or the like); a second source (6b) of the three laser sources performs laser markings at the green wavelength of 532 nm; and a third source (6c) of the three laser sources performs laser markings at the UV wavelength of 355 nm or optionally the UV wavelength of 266 nm.

The inventors have noted that the infrared wavelength of 1064 nm interacts in an excellent manner with plastic cards made of polycarbonate, while it has certain limitations in the case of cards made of PVC, PETG or ABS. By means of the system according to the present invention, which supports different wavelengths, it is possible to perform operations involving photo and text marking (IR wavelength), micro text, holograms (green/UV wavelength) on all the plastic materials currently used for the production of plastic cards.

This feature is very advantageous and results in the system having a considerable versatility and modular capability.

Obviously, instead of combining different apparatus 1 with laser sources 6a, 6b, 6c of varying wavelength, as mentioned above it is possible to incorporate in a single laser personalization device laser sources with different wavelengths (which can be activated as an alternative to each other) so as to have a laser personalization device 6 at the wavelength most suited for the particular application or particular substrate.

The laser personalization device 6 (as well as the devices 6a, 6b, 6c) comprises a solid-state laser source. The active means is typically a crystal with fairly small dimensions (for example 4x4x10 mm) which must dissipate a few tens of watts of heat.

The inventors have considered the problem of cooling the active means since the performance of the laser and in particular the thermal stability of the source depends greatly thereon. Thermal instability of the source would involve a fluctuation of the power (and other characteristics) and would result, in the case of card personalization applications, in an undesirable light/dark effect of the marking.

Plastic cards, in particular, are a medium which is extremely sensitive to thermal fluctuations of the source, in the sense that minimum fluctuations immediately result in evident shading.

Obviously, marking defects are particularly undesirable in the sector of plastic card personalization since they could indicate an attempt to falsify the document.

In order to favour thermal dissipation of the active means, traditionally suitable copper media are used and a thin sheet of ductile thermoconductive material is inserted between crystal and medium so as to maximise thermal contact between the parts. This copper assembly is then typically fixed to the resonator body directly or by means of active temperature-regulating systems.

The inventors have realised that the solution, although effective for dissipating heat (since copper is an excellent conductor), has certain drawbacks:
- Evacuation of heat from the crystal to the copper is efficient and very fast but, as such, results in intense thermal fluctuations which last a few seconds. However, these few seconds constitute precisely the time needed for personalization (marking) of a card which is therefore greatly influenced by it.
- Fixing of the copper assembly to the resonator body, typically made of aluminium acting as a dissipating mass, creates a thermal resistance between the parts which limits the dissipation efficiency;
- since the copper assembly is an independent part, the resonator may be subject to misalignment problems due to non-optimum fixing of the assembly.

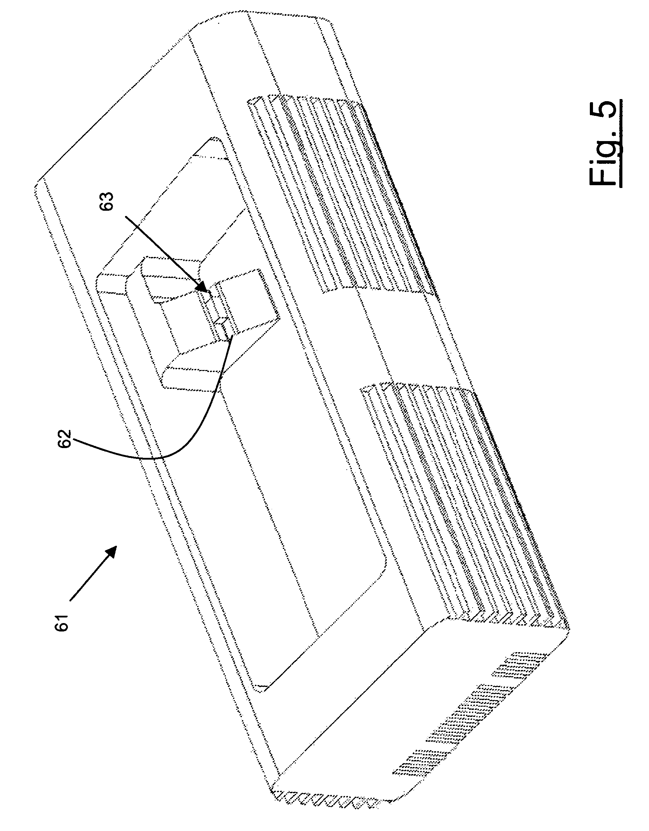

According to an advantageous aspect of the present invention, the seat for the crystal is formed directly in the resonator body. Advantageously, moreover, the resonator body is made of aluminium or aluminium alloy. Figure 5 shows an embodiment of a resonance cavity 61 according to the present invention.

The solution according to the present invention envisages that the seat 62 for the active means (crystal) 63 is formed directly in the resonator body and the resonator body is made of aluminium or aluminium alloy. This solution has proved to be advantageous for different reasons, including the following:
- despite the fact that aluminium is a material which is less efficient than copper for dissipating heat, the heat evacuation efficiency is nevertheless very good and the thermal fluctuations are decidedly less intense and slower compared to the known solutions. The result is that, even in the case of a sensitive medium such as plastic cards, these fluctuations are not evident. The inventors consider that this advantage is due to the much larger mass of the resonator body compared to that of a small copper assembly. Another related reason is the fact that the active means (crystal), in the solution according to the present invention is mounted substantially directly in contact with this mass. In reality it is preferably envisaged arranging a ductile thermoconductive material in between.
- owing to the fact that the crystal is mounted directly on the resonator body, misalignment problems are minimized.

The solution described above is advantageously able to ensure the stability of the laser source without using active temperature-regulating systems, in particular when the laser source is an IR source.

By means of the apparatus 1 for laser personalization of plastic cards, optionally associated with an encoding and/or colour printing module 20 and/or a laminating unit 21, it is therefore possible to provide in a decentralized manner documents with a high degree of passive safety, also if necessary starting with a virgin plastic card i.e. a card which is not personalized in any way (namely is devoid of any preprinted data or safety serigraphy and is therefore of no value).

Owing to the high thermal stability of the laser source (in particular the infrared source) it is possible to avoid using active performance-stabilizing systems which would increase the complexity and costs of the apparatus. The high thermal stability of the source is achieved owing to the fact that the entire resonator body made of aluminium is used as a dissipator for the active means, instead of using a traditional copper assembly.

In one embodiment a camera may be inserted inside the apparatus 1 in order to verify laser personalization of the card. Advantageously this camera may be mounted in the vicinity of the laser.

Advantageously, according to the present invention biometric data of the user may be captured and transmitted to the laser printer without the risk of being intercepted or memorized.

## Claims

1. Apparatus (1) for laser personalization of plastic cards, said apparatus (1) comprising:
a) a card feeder (4) for containing and feeding first plastic cards (3), each first plastic card (3) comprising a memorization device (31, 32) able to be encoded;
b) an encoder (5) for encoding the memorization device (31, 32) of said first plastic cards (3);
c) a first conveyor (7) configured so as to convey said first plastic cards (3) in a first direction (P1) from said card feeder (4) to a second conveyor (8),
wherein, during conveying of said first plastic cards (3) in the first direction (P1), the long side of the first plastic cards (3) is kept substantially parallel to said first direction (P1);
d) an inlet (11) configured to receive second plastic cards,
wherein said second conveyor (8) is configured to convey said first plastic cards (3) and/or said second plastic cards in a second direction (P2), wherein said second direction (P2) is substantially perpendicular to said first direction (P1); and
e) a laser personalization device (6) configured to receive said first (3) and/or said second plastic cards and configured so as to alter at least one portion of their surface in accordance with a predefined pattern,
wherein said first (3) and/or said second plastic cards are conveyed through said laser personalization device (6) to an exit opening (O) of said apparatus (1) along said second direction (P2), the long side of the plastic cards (3) being kept substantially perpendicular to said second direction (P2).

2. Apparatus (1) according to Claim 1, **characterized in that** said inlet (11) is situated on a side wall (1 c) of said apparatus (1).

3. Apparatus (1) according to Claim 1 or 2, **characterized in that** said inlet (11) allows manual feeding of second plastic cards.

4. Apparatus (1) according to any one of the preceding claims, **characterized in that** said memorization device (31, 32) able to be encoded comprises at least either a magnetic strip (31) or a chip (32).

5. Apparatus (1) according to any one of the preceding claims, **characterized in that** said second plastic cards comprise a memorization device which is already encoded.

6. Apparatus (1) according to any one of the preceding claims, **characterized in that** said first (7) and second (8) conveyors comprise rubber rollers and belts.

7. Apparatus (1) according to any one of the preceding claims, **characterized in that** said personalization module (6) comprises at least one laser source where a seat for the active means is formed directly in the resonator body.

8. Apparatus (1) according to Claim 7, **characterized in that** the resonator body is made of aluminium or aluminium alloy.

9. System (10) for laser personalization of plastic cards, said system (10) comprising an apparatus (1) according to any one of Claims 1 to 9 and at least one apparatus (20, 21) chosen from an encoding and/or printing module (20) and a laminating unit (21) for applying a protective film.

10. System (10) according to Claim 9, **characterized in that** it comprises at least one other apparatus (1) according to any one of Claims 1 to 8, in which each of the apparatuses (1) comprises a respective laser source having a wavelength different from the laser source of the other apparatuses (1).

11. System (10) according to Claim 10, **characterized in that** it comprises a first apparatus (1) according to any one of Claims 1 to 8 having a laser source with an infrared wavelength, a second apparatus (1) according to any one of Claims 1 to 8 having a laser source with a green wavelength, and a third apparatus (1) according to any one of Claims 1 to 8 having a laser source with a UV wavelength.

12. Method for laser personalization of plastic cards, said method comprising:
a) providing a card feeder (4) for containing and feeding first plastic cards (3), each first plastic card (3) comprising a memorization device (31, 32) able to be encoded;
b) providing an encoder (5) for encoding the memorization device (31, 32) of said first plastic cards (3);
c) providing a first conveyor (7) configured so as to convey said first plastic cards (3) in a first direction (P1) from said card feeder (4) to a second conveyor (8),
wherein, during conveying of said first plastic cards (3) in said first direction (P1), the long side of the first plastic cards (3) is kept substantially parallel to said first direction (P1);
d) providing an inlet (11) configured to receive second plastic cards,
wherein said second conveyor (8) is configured to convey said first plastic cards (3) and/or said second plastic cards in a second direction (P2), wherein said second direction (P2) is substantially perpendicular to said first direction (P1); and
e) providing a laser personalization device (6) configured to receive said first (3) and/or said second plastic cards and configured so as to alter at least one portion of their surface in accordance with a predefined pattern, wherein said first (3) and/or said second plastic cards are conveyed through said laser personalization device (6) to an exit opening (O) of said apparatus (1) along said second direction (P2), the long side of the plastic cards (3) being kept substantially perpendicular to said second direction (P2).

## Patentansprüche

1. Vorrichtung (1) zum Personalisieren von Plastikkarten mittels Laser, wobei die besagte Vorrichtung (1) aufweist
a) eine Kartenzuführeinrichtung (4) zum Aufnehmen und Zuführen von ersten Plastikkarten (3), wobei jede erste Plastikkarte (3) eine Speichervorrichtung (31, 32), die codiert werden kann, aufweist;
b) eine Codiereinrichtung (5) zum Codieren der Speichervorrichtung (31, 32) der besagten ersten Plastikkarten (3);
c) einen ersten Förderer (7), der dazu eingerichtet ist, die ersten Plastikkarten (3) in einer ersten Richtung (P1) von der besagten Kartenzuführeinrichtung (4) zu einem zweiten Förderer (8) zu befördern,
wobei während dem Befördern der besagten ersten Plastikkarten (3) in der ersten Richtung (P1) die lange Seite der ersten Plastikkarten (3) im Wesentlichen parallel zu der besagten ersten Richtung (P1) gehalten ist;
d) einen Einlass (I1), der dazu eingerichtet ist, zweite Plastikkarten aufzunehmen,
wobei der besagte zweite Förderer (8) dazu eingerichtet ist, die besagten ersten Plastikkarten (3) und/oder die besagten zweiten Plastikkarten in einer zweiten Richtung (P2) zu befördern, wobei die besagte zweite Richtung (P2) im Wesentlichen senkrecht zu der besagten ersten Richtung (P1) liegt; und
e) eine Laserpersonalisierungsvorrichtung (6), die dazu eingerichtet ist, die besagten ersten (3) und/oder die besagten zweiten Plastikkarten aufzunehmen, und die dazu eingerichtet ist, zumindest einen Bereich von deren Oberflächen gemäß einem vorbestimmten Muster zu ändern,
wobei die besagten ersten (3) und/oder die besagten zweiten Plastikkarten durch die besagte Laserpersonalisierungsvorrichtung (6) zu einer Ausgangsöffnung (O) der besagten Vorrichtung (1) entlang der besagten zweiten Richtung (P2) befördert werden, wobei die lange Seite der Plastikkarten (3) im Wesentlichen senkrecht zu der besagten zweiten Richtung (P2) gehalten ist.

2. Vorrichtung (1) nach Anspruch 1,
**dadurch gekennzeichnet,**
**dass** der besagte Einlass (11) an einer Seitenwand (1 c) der besagten Vorrichtung (1) gelegen ist.

3. Vorrichtung (1) nach Anspruch 1 oder 2,
**dadurch gekennzeichnet,**
**dass** der besagte Einlass (11) ein manuelles Zuführen von zweiten Plastikkarten ermöglicht.

4. Vorrichtung (1) nach einem der vorausgegangenen Ansprüche,
**dadurch gekennzeichnet,**
**dass** die besagte Speichervorrichtung (31, 32), die codiert werden kann, mindestens entweder einen Magnetstreifen (31) oder einen Chip (32) aufweist.

5. Vorrichtung (1) nach einem der vorausgegangenen Ansprüche,
**dadurch gekennzeichnet,**
**dass** die besagten zweiten Plastikkarten eine Speichervorrichtung, die bereits codiert ist, aufweisen.

6. Vorrichtung (1) nach einem der vorausgegangenen Ansprüche,
**dadurch gekennzeichnet,**
**dass** der besagte erste (7) und der zweite (8) Förderer Gummirollen oder -Bänder aufweisen.

7. Vorrichtung (1) nach einem der vorausgegangenen Ansprüche,
**dadurch gekennzeichnet,**
**dass** das besagte Personalisierungsmodul (6) mindestens eine Laserquelle aufweist, wo ein Sitz für das aktive Medium direkt in dem Resonatorkörper gebildet ist.

8. Vorrichtung (1) nach Anspruch 7,
**dadurch gekennzeichnet,**
**dass** der Resonatorkörper mit Aluminium oder einer Aluminiumlegierung hergestellt ist.

9. System (10) zum Personalisieren von Plastikkarten mittels Laser,
wobei das besagte System (10) eine Vorrichtung (1) nach einem der Ansprüche 1 bis 9 und mindestens eine Vorrichtung (20, 21) aufweist, die aus einem Codier- und/oder einem Druckermodul (20) und einer Laminiereinheit (21) zum Auftragen eines Schutzfilms ausgewählt ist.

10. System (10) nach Anspruch 9,
**dadurch gekennzeichnet,**
**dass** es mindestens eine weitere Vorrichtung (1) nach einem der Ansprüche 1 bis 8 aufweist, wobei jede der Vorrichtungen (1) jeweils eine Laserquelle mit einer Wellenlänge, die von den Laserquellen der anderen Vorrichtungen (1) verschieden ist, aufweist.

11. System (10) nach Anspruch 10,
**dadurch gekennzeichnet,**
**dass** es eine erste Vorrichtung (1) nach einem der Ansprüche 1 bis 8, welche eine Laserquelle mit einer infraroten Wellenlänge umfasst, eine zweite Vorrichtung (1) nach einem der Ansprüche 1 bis 8, welche eine Laserquelle mit einer grünen Wellenlänge umfasst, und eine dritte Vorrichtung (1) nach einem der Ansprüche 1 bis 8, welche eine Laserquelle mit einer UV-Wellenlänge umfasst, aufweist.

12. Verfahren zum Personalisieren von Plastikkarten mittels Laser,
wobei das besagte Verfahren aufweist:
a) Bereitstellen einer Kartenzuführeinrichtung (4) zum Beinhalten und Zuführen von ersten Plastikkarten (3), wobei jede erste Plastikkarte (3) eine Speichervorrichtung (31, 32), die codiert werden kann, aufweist;
b) Bereitstellen einer Codiereinrichtung (5) zum Codieren der Speichervorrichtung (31, 32) der besagten ersten Plastikkarten (3);
c) Bereitstellen eines ersten Förderers (7) der dazu eingerichtet ist, die besagten ersten Plastikkarten (3) in einer ersten Richtung (P1) von der besagten Kartenzuführeinrichtung (4) zu einem zweiten Förderer (8) zu befördern,
wobei während dem Befördern der besagten ersten Plastikkarten (3) in der besagten ersten Richtung (P1) die lange Seite der ersten Plastikkarten (3) im Wesentlichen parallel zu der besagten ersten Richtung (P1) gehalten wird;
d) Bereitstellen eines Einlasses (11), der dazu eingerichtet ist, zweite Plastikkarten aufzunehmen,
wobei der besagte zweiter Förderer (8) dazu eingerichtet ist, die besagten ersten Plastikkarten (3) und/oder die besagten zweiten Plastikkarten in einer zweiten Richtung (P2) zu befördern, wobei die besagte zweite Richtung (P2) im Wesentlichen senkrecht zu der besagten ersten Richtung (P1) liegt; und
e) Bereitstellen einer Laserpersonalisierungsvorrichtung (6), die dazu eingerichtet ist, die besagten ersten (3) und/oder die besagten zweiten Plastikkarten aufzunehmen, und die dazu eingerichtet ist, mindestens einen Bereich von deren Oberfläche gemäß einem vorbestimmten Muster zu ändern, wobei die besagten ersten (3) und/oder die besagten zweiten Plastikkarten durch die besagte Laserpersonalisierungsvorrichtung (6) zu einer Ausgangsöffnung (O) der besagten Vorrichtung (1) entlang der besagten zweiten Richtung (P2) befördert werden, wobei die lange Seite der Plastikkarten (3) im Wesentlichen senkrecht zu der besagten zweiten Richtung (P2) gehalten wird.

## Revendications

1. Appareil (1) pour la personnalisation laser de cartes plastiques, ledit appareil (1) comprenant :
(a) un chargeur de cartes (4) pour contenir et charger des premières cartes plastiques (3), chaque première carte plastique (3) comprenant un dispositif de mémorisation (31, 32) apte à être codé ;
(b) un codeur (5) pour coder le dispositif de mémorisation (31, 32) desdites premières cartes plastiques (3) ;
c) un premier convoyeur (7) configuré pour acheminer lesdites premières cartes plastiques (3) dans une première direction (P1) depuis ledit chargeur de cartes (4) vers un second convoyeur (8),
dans lequel, lors de l'acheminement desdites premières cartes plastiques (3) dans la première direction (P1), le côté long des premières cartes plastiques (3) est maintenu sensiblement parallèle à ladite première direction (P1) ;
d) une entrée (I1) configurée pour recevoir les secondes cartes plastiques,
dans lequel ledit second convoyeur (8) est configuré pour acheminer lesdites premières cartes plastiques (3) et/ou lesdites secondes cartes plastiques dans une seconde direction (P2), ladite seconde direction (P2) étant sensiblement perpendiculaire à ladite première direction (P1) ; et
e) un dispositif de personnalisation laser (6) configuré pour recevoir lesdites premières (3) et/ou lesdites secondes cartes plastiques et configuré de manière à modifier au moins une partie de leur surface selon un motif prédéfini,
dans lequel lesdites premières (3) et/ou lesdites secondes cartes plastiques sont acheminées à travers ledit dispositif de personnalisation laser (6) vers une ouverture de sortie (0) dudit appareil (1) le long de ladite seconde direction (P2), le côté long des cartes plastiques (3) étant maintenu sensiblement perpendiculaire à ladite seconde direction (P2).

2. Appareil (1) selon la revendication 1, **caractérisé en ce que** ladite entrée (I1) est située sur une paroi latérale (1c) dudit appareil (1).

3. Appareil (1) selon la revendication 1 ou 2, **caractérisé en ce que** ladite entrée (I1) permet le chargement manuel des secondes cartes plastiques.

4. Appareil (1) selon l'une quelconque des revendications précédentes, **caractérisé en ce que** ledit dispositif de mémorisation (31, 32) apte à être codé comprend au moins soit une bande magnétique (31), soit une puce (32).

5. Appareil (1) selon l'une quelconque des revendications précédentes, **caractérisé en ce que** lesdites secondes cartes plastiques comprennent un dispositif de mémorisation qui est déjà codé.

6. Appareil (1) selon l'une quelconque des revendications précédentes, **caractérisé en ce que** lesdits premier (7) et second (8) convoyeurs comprennent des rouleaux et des courroies en caoutchouc.

7. Appareil (1) selon l'une quelconque des revendications précédentes, **caractérisé en ce que** ledit module de personnalisation (6) comprend au moins une source laser où une assise pour les moyens actifs est formée directement dans le corps du résonateur.

8. Appareil (1) selon la revendication 7, **caractérisé en ce que** le corps de résonateur est fabriqué à partir d'aluminium ou d'alliage d'aluminium.

9. Système (10) pour la personnalisation laser de cartes plastiques, ledit système (10) comprenant un appareil (1) selon l'une quelconque des revendications 1 à 9 et au moins un appareil (20, 21) choisi à partir d'un module de codage et/ou d'impression (20) et d'une unité de plastification (21) pour appliquer un film de protection.

10. Système (10) selon la revendication 9, **caractérisé en ce qu'**il comprend au moins un autre appareil (1) selon l'une quelconque des revendications 1 à 8, chacun des appareils (1) comprenant une source laser respective ayant une longueur d'onde différente de la source laser des autres appareils (1).

11. Système (10) selon la revendication 10, **caractérisé en ce qu'**il comprend un premier appareil (1) selon l'une quelconque des revendications 1 à 8 comprenant une source laser ayant une longueur d'onde infrarouge, un deuxième appareil (1) selon l'une quelconque des revendications 1 à 8 comprenant une source laser ayant une longueur d'onde verte, et un troisième appareil (1) selon l'une quelconque des revendications 1 à 8 comprenant une source laser ayant une longueur d'onde UV.

12. Procédé pour la personnalisation laser de cartes plastiques, ledit procédé consistant à :
a) fournir un chargeur de cartes (4) destiné à contenir et charger des premières cartes plastiques (3), chaque première carte plastique (3) comprenant un dispositif de mémorisation (31, 32) apte à être codé ;
b) fournir un codeur (5) destiné à coder le dispositif de mémorisation (31, 32) desdites premières cartes plastiques (3) ;
c) fournir un premier convoyeur (7) configuré de manière à acheminer lesdites premières cartes plastiques (3) dans une première direction (P1) depuis ledit chargeur de cartes (4) vers un second convoyeur (8),
dans lequel, lors de l'acheminement desdites premières cartes plastiques (3) dans ladite première direction (P1), le côté long des premières cartes plastiques (3) est maintenu sensiblement parallèle à ladite première direction (P1) ;
d) fournir une entrée (I1) configurée pour recevoir des secondes cartes plastiques, dans lequel ledit second convoyeur (8) est configuré pour acheminer lesdites premières cartes plastiques (3) et/ou lesdites secondes cartes plastiques dans une seconde direction (P2), ladite seconde direction (P2) étant sensiblement perpendiculaire à ladite première direction (P1) ; et
e) fournir un dispositif de personnalisation laser (6) configuré pour recevoir lesdites premières (3) et/ou lesdites secondes cartes plastiques et configuré de manière à modifier au moins une partie de leur surface selon un motif prédéfini, dans lequel lesdites premières (3) et/ou lesdites secondes cartes plastiques sont acheminées à travers ledit dispositif de personnalisation laser (6) vers une ouverture de sortie (0) dudit appareil (1) le long de ladite seconde direction (P2), le côté long des cartes plastiques (3) étant maintenu sensiblement perpendiculaire à ladite seconde direction (P2).
